(19) **Europäisches Patentamt**
**European Patent Office**
**Office européen des brevets**

(11) **EP 1 669 602 B1**

(12) **EUROPEAN PATENT SPECIFICATION**

(45) Date of publication and mention
of the grant of the patent:
**12.09.2007 Bulletin 2007/37**

(51) Int Cl.:
**F04B 35/04** *(2006.01)*          **F04B 49/06** *(2006.01)*

(21) Application number: **05014925.1**

(22) Date of filing: **09.07.2005**

(54) **Apparatus and method for controlling operation of reciprocating motor compressor**

Vorrichtung und Verfahren zur Steuerung eines Kolbenkompressors

Dispositif et procédé de commande d'un compresseur alternatif

(84) Designated Contracting States:
**DE FR GB**

(30) Priority: **10.12.2004 KR 2004104397**

(43) Date of publication of application:
**14.06.2006 Bulletin 2006/24**

(73) Proprietor: **LG ELECTRONICS INC.**
**Seoul (KR)**

(72) Inventors:
• **Kim, Hyung-Joo**
**Songpa-Gu**
**Seoul (KR)**

• **Heo, Kyung-Bum**
**Gwangmyeong**
**Gyeonggi-Do (KR)**
• **Lee, Chel-Woong**
**Dongjak-Gu**
**Seoul (KR)**

(74) Representative: **Schippan, Ralph**
**COHAUSZ & FLORACK**
**Patent- und Rechtsanwälte**
**Bleichstrasse 14**
**40211 Düsseldorf (DE)**

(56) References cited:
**US-A1- 2001 043 450          US-A1- 2002 064 463**
**US-A1- 2003 129 063          US-A1- 2003 180 151**

Printed by Jouve, 75001 PARIS (FR)

**Description**

BACKGROUND OF THE INVENTION

1. Field of the Invention

The present invention relates to a reciprocating (linear) motor compressor and, more particularly, to an apparatus and method for controlling an operation of a reciprocating motor compressor.

2. Description of the Prior Art

In general, a reciprocating motor compressor (hereinafter, for simplicity, referred to as "reciprocating motor compressor") which is operated by a linearly reciprocating electric motor without a crank shaft for converting a rotational motion to a linear motion, a reciprocating compressor has less friction loss, and thus, can provide a higher compression efficiency than other compressors.

When the reciprocating motor compressor is used for a refrigerator or an air-conditioner, a compression ratio of the compressor can be varied to control the cooling capacity by varying a stroke voltage applied to the reciprocating motor of the compressor.

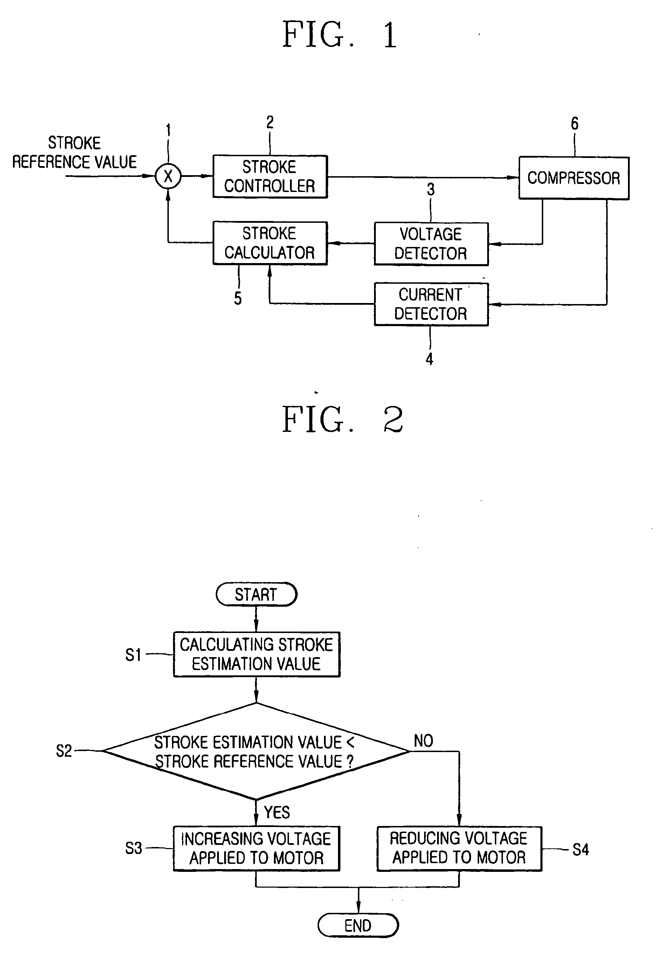

The conventional controlling of a reciprocating motor compressor will now be described with reference to Figure 1.

Figure 1 is a block diagram showing the construction of an apparatus for controlling an operation of a reciprocating motor compressor in accordance with the prior art.

As shown in Figure 1, the apparatus for controlling an operation of a reciprocating motor compressor includes a current detector 4 detecting a current applied to the reciprocating motor (not shown) of the compressor 6, a voltage detector 3 detecting a voltage applied to the motor, a stroke calculator 5 calculating a stroke estimation value based on the detected current and voltage values and a certain operational parameter of the motor, a comparator 1 comparing the calculated stroke estimation value with a pre-set stroke reference value, and outputting a difference value according to the compared result, and a stroke controller 2 controlling an operation (stroke) of the compressor 6 by varying the voltage applied to the motor by controlling a turn-on period of a triac (not shown) connected in series with the motor according to the difference value. Herein, when the stroke controller 2 controls the turn-on period of the triac applying power to the motor, it controls a firing angle ($\alpha$1) of the triac during of a positive (+) phase and a firing angle ($\alpha$2) of the triac during of a negative (-) phase of the current flowing at the triac to be the same, i.e., $\alpha$1=$\alpha$2.

The operation of the apparatus for controlling the operation of the reciprocating motor compressor will now be described with reference to Figure 1.

First, the current detector 4 detects the current being applied to the motor (not shown) of the compressor 6 and outputs the value of the detected current to the stroke calculator 5. At this time, the voltage detector 3 detects the voltage being applied to the motor and outputs the value of the detected voltage to the stroke calculator 5.

The stroke calculator 5 calculates the stroke estimation value (X) of the compressor based on the detected current and voltage values and the operational parameter of the motor according to equation (1) shown below, and then applies the calculated stroke estimation value (X) to the comparator 1:

$$X = \frac{1}{\alpha} \int (V_M - Ri - L\bar{i})dt \quad \text{------ (1)}$$

wherein 'R' is the motor resistance value, 'L' is the motor inductance value, '$\alpha$' is a motor constant, Vm is the value of the voltage applied to the motor, 'I' is the value of the current applied to the motor, and $\bar{i}$ is the differentiated value (di/dt) of 'i'.

Thereafter, the comparator 1 compares the stroke estimation value and the stroke reference value, and applies a difference value according to the compared result to the stroke controller 2.

The stroke controller 2 controls the stroke of the compressor 6 by varying the voltage being applied to the motor of the compressor 6 based on the difference value. This will be described with reference to Figure 2 as follows.

Figure 2 is a flow chart of a method for controlling an operation of the reciprocating motor compressor in accordance with the prior art.

First, when the stroke estimation value is applied to the comparator 1 by the stroke calculator 5 (step S1), the comparator 1 compares the stroke estimation value with the pre-set stroke reference value (step S2) and outputs the difference value according to the compared result to the stroke controller 2.

If the stroke estimation value is smaller than the stroke reference value, the stroke controller 2 increases a voltage applied to the motor in order to control the stroke of the compressor (step S3). If, however, the stroke estimation value is greater than the reference value, the stroke controller 2 reduces the voltage applied to the motor (step S4). In this case, in order to increase or reduce the voltage applied to the motor, the turn-on period of the triac (not shown) electrically connected with the motor is controlled to apply the voltage to the motor.

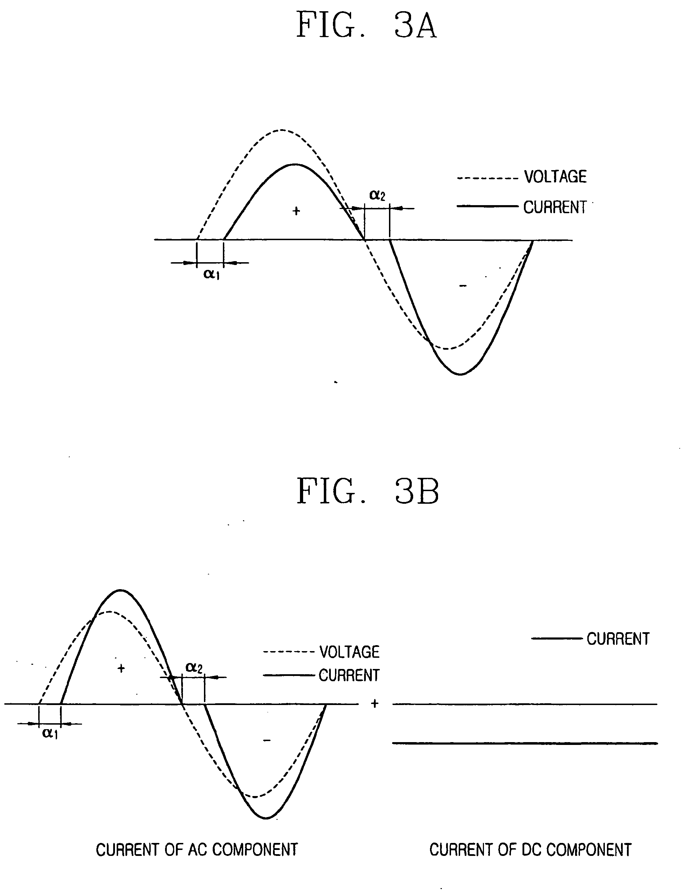

Meanwhile, when the motor is controlled through the triac, a loss in the motor increases. The reason for this will now be described with reference to Figures 3A and 3B.

Figures 3A and 3B are waveform diagrams showing waveforms of the voltage and current applied to the motor of the reciprocating motor compressor in accordance with the prior art.

As shown in Figure 3A, in the apparatus for controlling an operation of the reciprocating motor compressor, when the turn-on period of the triac applying power to the motor is controlled, the firing angle ($\alpha$1) of the triac during the positive (+) half cycle phase of the voltage flowing at the triac and the firing angle ($\alpha$2) of the triac during the negative (-) half cycle phase are controlled to be the same. Consequently, the positive phase and the negative phase of the current applied to the motor become relatively asymmetrical.

With reference to Figure 3B, the asymmetrical current can be divided into symmetrical AC component current and a DC component current, and the DC component current increases a loss in the motor. Namely, the loss in the motor increases according to equation (2) shown below:

$$Motor_{loss} = i^2 (R_{AC} + R_{DC}) \quad \text{---------- (2)}$$

wherein 'i' is the current applied to the motor, '$R_{AC}$' is an iron loss and a copper loss arising due to the AC component current applied to the motor, and '$R_{DC}$' is a copper loss arising due to the DC component current applied to the motor. It is noted that the AC component contributes to both the iron loss and the copper loss, while the DC component contributes only to the copper loss.

As stated above, the conventional apparatus for controlling an operation of the reciprocating motor compressor has the problem that since the DC component current is applied, the loss in the motor increases.

U.S. Patent No. 6,779,982 issued on August 24, 2004 also discloses a conventional reciprocating motor compressor.

U.S. Patent application No. 2002/0064463 A1 issued on May 30, 2003, discloses an apparatus for controlling an operation of a linear compressor wherein a detected current applied to the motor is integrated for one period and a corresponding work operation value is outputted, and wherein a switching control signal for switching an ON/OFF period of a triac is generated based on the current work operation value and the previous work operation value.

A further apparatus for controlling a reciprocating compressor is disclosed in U.S. Patent application No. 2003/0180151 A1 issued on September 25, 2003.

SUMMARY OF THE INVENTION

It is, therefore, an object of the present invention to provide an apparatus and method for controlling an operation of a reciprocating motor compressor which capable of reducing a loss in the motor by eliminating a current of a DC component applied to the motor of the compressor.

To achieve these and other advantages and in accordance with the purpose of the present invention, as embodied and broadly described herein, there is provided an apparatus for controlling an operation of a reciprocating motor compressor including: a current integrator for integrating an alternating current applied to a motor of the compressor during each one cycle thereof; and a controller for differently controlling a firing angle of a triac during a positive (+) phase and a firing angle of the triac during a negative (-) phase of an AC voltage applied to the motor based on the integrated value of the current.

To achieve the above object, there is also provided an apparatus for controlling an operation of a reciprocating motor compressor including: a current detector for detecting an alternating current applied to a motor of the reciprocating motor compressor; a voltage detector for detecting a voltage applied to the motor; a stroke calculator for calculating a stroke estimation value of the reciprocating motor compressor based on the value of the detected current and a value of the detected voltage; a current integrator for integrating the current detected during each one cycle thereof through the current detector; a comparator for comparing the stroke estimation value and a pre-set stroke reference value, and outputting a difference value according to the compared result; and a controller for controlling a turn-on period of a switching device connected in series with the motor according to the difference value, generating a control signal for differently controlling a firing angle of the switching device during a positive phase and a firing angle of the switching device during a negative phase of the AC voltage applied to the motor based on the integrated value of the current, and outputting the generated control signal to the switching device.

To achieve the above object, there is also provided a method for controlling an operation of a reciprocating motor compressor including: integrating an alternating current applied to a motor of the compressor during each one cycle thereof; and differently controlling a firing angle of a switching device during a positive phase and a firing angle of the switching device during a negative phase of an AC voltage applied to the motor based on the integrated current value.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a schematic block diagram showing the construction of an apparatus for controlling an operation of a reciprocating motor compressor in accordance with the prior art;

Figure 2 is a flow chart of a method for controlling the operation of the reciprocating motor compressor in accordance with the prior art;

Figures 3A and 3B are waveform diagrams showing waveforms of a voltage and a current applied to a motor of the reciprocating motor compressor in accordance with the prior art;

Figure 4 is a schematic block diagram showing the construction of an apparatus for controlling an operation of a reciprocating motor compressor in accordance with the present invention;

Figure 5 is a flow chart of a method for controlling the operation of a reciprocating motor compressor in accordance with the present invention; and

Figure 6 is a waveform diagram showing waveforms of the voltage and current applied to the motor of the compressor by the apparatus for controlling the operation of the reciprocating motor compressor in accordance with the present invention.

DETAILED DESCRIPTION OF THE INVENTION

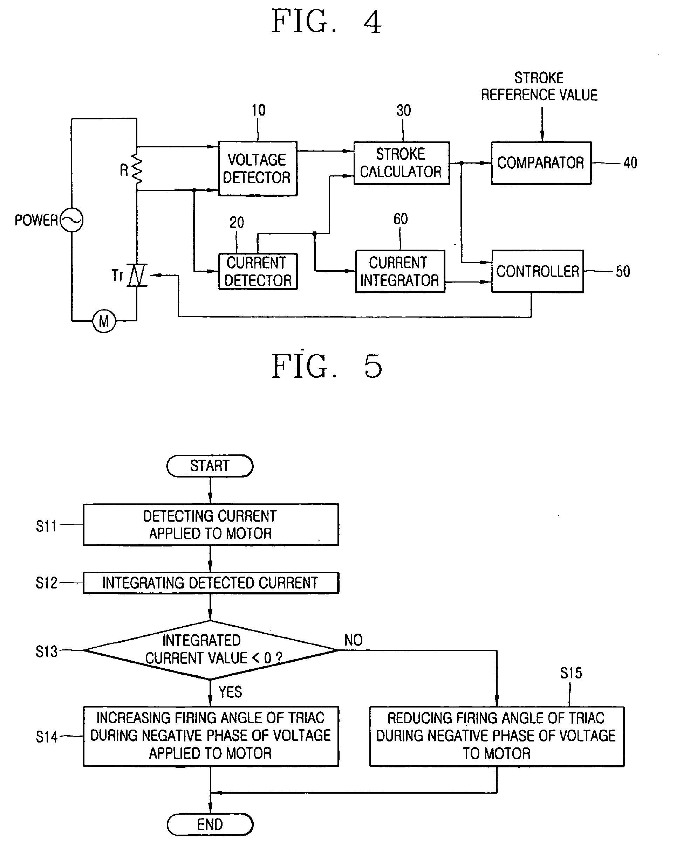

An apparatus and method for controlling an operation of a reciprocating motor compressor in accordance with the present invention which is capable of reducing a motor loss by eliminating a DC component of a current applied to the motor by integrating the current applied to the motor during one cycle and differently controlling a firing angle of a triac during a positive phase and a firing angle of the triac during a negative phase of the current applied to the motor based on the integrated current value will now be described with reference to Figures 4 to 6.

Figure 4 is a schematic block diagram showing the construction of the apparatus for controlling the operation of a reciprocating motor compressor in accordance with the present invention.

As shown in Figure 4, the apparatus for controlling the operation of the reciprocating motor compressor includes a voltage detector 10 detecting a voltage applied to a motor (M) of the compressor, a current detector 20 detecting a current applied to the motor (M) of the compressor, a stroke calculator 30 calculating a stroke estimation value of the compressor based on the detected current and voltage values, a current integrator 60 integrating the current detected through the current detector 20 during one cycle, a comparator 40 comparing the stroke estimation value and a pre-set stroke reference value and outputting a difference value according to the compared result, and a controller 50 controlling a turn-on period of a triac Tr connected in series with the motor according to the difference value, by generating a control signal differently controlling a firing angle of the triac Tr during the positive phase and during the negative phase of the voltage applied to the motor based on the integrated current value, and outputting the generated control signal to the triac. Herein, the triac is turned on by the control signal and can be replaced with any other suitable switching device such as an inverter.

The controller 50 controls the firing angle of the triac Tr during the positive phase of the voltage applied to the motor according to the difference value likewise as in the prior art. But, if the integrated current value is greater than '0', the controller 50 reduces the firing angle of the triac Tr during the negative phase of the voltage, while if the integrated current value is smaller than '0', the controller 50 increases the firing angle of the triac Tr during the negative phase of the voltage.

When the positive phase and the negative phase of the current applied to the motor during one cycle are asymmetrical, the integrated value of the current applied to the motor during one cycle is smaller or greater than '0'. When the positive phase and the negative phase of the current applied to the motor during one cycle are symmetrical, the integrated value of the current applied to the motor during one cycle is equal to '0'. In addition, when the positive phase and the negative phase of the current applied to the motor are symmetrical, the AC component of the current is maintained while the DC (offset) component of the current generating a copper loss is eliminated. Namely, in the present invention, a control signal for differently controlling the firing angle of the triac during the positive phase and the firing angle of the triac during the negative phase of the voltage applied to the motor is applied to the triac to supply the motor with waveforms of the symmetrical current component.

The operation of the apparatus for controlling the operation of the reciprocating motor compressor in accordance with the present invention will be described in detail with reference to Figures 4 and 5.

Figure 5 is a flow chart of a method for controlling the operation of the reciprocating motor compressor in accordance with the present invention.

First, the current detector 20 detects the current being applied to the motor (M) of the compressor and outputs the detected current value to the stroke calculator 30 and to the current integrator 60 (step S11). At this time, the voltage detector 10 detects the voltage being applied to the motor (M) of the compressor and outputs the detected voltage value to the stroke calculator 30.

The stroke calculator 30 calculates a stroke of the compressor based on the current value outputted from the current detector 20 and the voltage value outputted from the voltage detector 10.

Thereafter, the current integrator 60 integrates the current value outputted from the current detector 20 and outputs the integrated current value to the controller 50. Namely, the current integrator 60 integrates the current applied to the motor during each one cycle and outputs the integrated current value to the controller 50 (step S12).

Meanwhile, the comparator 40 compares the stroke estimation value and the stroke reference value and outputs a difference value according to the compared result.

The controller 50 controls the turn-on period of the triac connected in series with the motor according to the difference value. At this time, the controller 50 controls the firing angle of the triac during the positive phase of the voltage according to the difference value outputted from the comparator 40.

If the integrated current value is smaller than '0', the controller 50 increases the firing angle of the triac during the negative phase of the voltage (steps S13 and S14), while if the integrated current value is greater than '0', the controller 50 decreases the firing angle of the triac during the negative phase of the voltage (step S15).

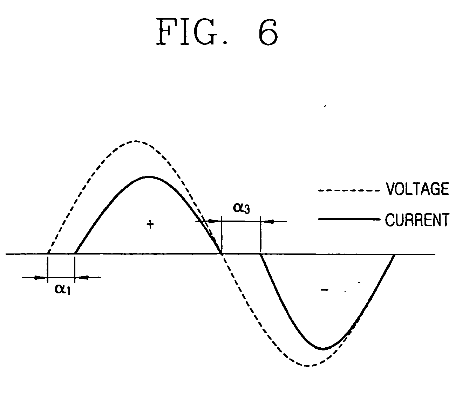

Figure 6 is a waveform diagram showing waveforms of the voltage and current applied to a motor of the compressor by the apparatus for controlling the operation of the reciprocating motor compressor in accordance with the present invention.

As shown in Figure 6, the firing angle ($\alpha$1) of the triac during positive phase of the voltage applied to the motor and the firing angle ($\alpha$3) of the negative phase are differently controlled to eliminate the DC component of the current applied to the motor of the compressor, whereby the positive phase and the negative phase of the current applied to the motor become symmetrical and the current as such is applied to the motor, reducing the loss in the motor.

Thus, in the present invention, in brief, the firing angle of the triac during positive phase and the firing angle of the triac during the negative phase of the voltage applied to the motor are controlled to be different and the current applied to the motor during each one cycle is integrated, and then, if the integrated current value is greater than '0', the firing angle ($\alpha$3) of the triac during the negative phase of the voltage is reduced while if the integrated current value is smaller than '0', the firing angle ($\alpha$3) of the triac during the negative phase of the voltage is increased to make the positive phase and the negative phase of the current applied to the motor symmetrical. With the negative phase and the positive phase of the current symmetrical, no DC offset component is present in the current applied to the motor. Herein, preferably, the firing angle ($\alpha$1) during the positive voltage phase is the same as in the prior art.

As so far described, the apparatus and method for controlling an operation of a reciprocating motor compressor in accordance with the present invention has the advantage that since the firing angle during the positive phase and the firing angle during the negative phase of the AC voltage applied to the motor of the compressor may be controlled different as appropriate, the positive phase and the negative phase of the current applied to the motor can be made symmetrical. Namely, by avoiding that any DC component current is applied to the motor by controlling the negative phase and the positive phase of the current applied to the motor to be symmetrical, the loss in the motor can be reduced.

**Claims**

1. An apparatus for controlling an operation of a reciprocating motor compressor comprising:

   a current integrator (60) for integrating an alternating current applied to a motor of the reciprocating motor compressor during each one cycle of said current; **characterized in that** said apparatus comprises
   a controller (50) for independently controlling a firing angle ($\alpha_1$, $\alpha_2$) of a switching device through which said current is applied to said motor during a positive phase and a negative phase of an AC voltage applied to the motor, based on the integrated value of the current.

**2.** The apparatus of claim 1, wherein the controller (50) can control the firing angle ($\alpha_1$) during the positive phase and the firing angle ($\alpha_2$) during the negative phase to be different, in order to make a positive phase and a negative phase of the current applied to the motor symmetrical.

**3.** The apparatus of claim 1, wherein the controller (50) can control the firing angle ($\alpha_1$) during the positive phase and the firing angle during ($\alpha_2$) the negative phase to be different in order to prevent any DC component in the current applied to the motor.

**4.** The apparatus of claim 1, wherein if the integrated current value is greater than '0', the controller (50) reduces the firing angle ($\alpha_2$) during the negative phase of the AC voltage, while if the integrated current value is smaller than '0', the controller increases the firing angle ($\alpha_2$) during the negative phase of the AC voltage.

**5.** The apparatus of any of claims 1 to 4, wherein said apparatus further comprises:

a current detector (20) for detecting the current applied to the motor of the reciprocating motor compressor;
a voltage detector (10) for detecting the AC voltage applied to the motor;
a stroke calculator (30) for calculating a stroke estimation value of the reciprocating motor compressor based-on the value of the detected current and a value of the detected voltage;
a comparator (40) for comparing the stroke estimation value and a pre-set stroke reference value, and outputting a difference value according to the compared result; and
wherein the controller (50) furthercontrols a turn-on period of the switching device connected in series with the motor according to the difference value, and wherein said controller (50) generates a control signal according to said independently controlling of the firing angle ($\alpha_1$, $\alpha_2$) and outputs the generated control signal to the switching device.

**6.** The apparatus of claim 5, wherein the switching device is an inverter.

**7.** The apparatus of any of claims 1 to 5, wherein the switching device is a triac.

**8.** The apparatus of claim 5, wherein the switching device is a triac, and wherein the triac is turned on by the control signal.

**9.** The apparatus of claim 8, wherein the firing angle ($\alpha_1$) during the positive phase is fixed when the firing angle ($\alpha_2$) during the negative phase of the voltage is increased or decreased.

**10.** A method for controlling an operation of a reciprocating motor compressor comprising:

integrating an alternating current applied to the motor of a compressor during each one cycle thereof; **characterized in**
differently controlling a turn-on time of a switching device switching the
application of the current to the motor during a positive phase and during a negative phase of an AC voltage applied to the motor based on the integrated current value.

**11.** The method of claim 10, wherein the step of differently controlling the turn-on time during the positive phase and during the negative phase comprises:

reducing a firing angle ($\alpha_2$) of the switching device during the negative phase of the voltage if the integrated current value is greater than '0'; and
increasing the firing angle ($\alpha_2$) of the switching device during negative phase of the voltage if the integrated current value is smaller than '0'.

**12.** The method of claim 10, wherein the firing angle ($\alpha_1$) during the positive phase is fixed when the firing angle ($\alpha_2$) during the negative phase of the voltage is increased or decreased.

**Patentansprüche**

**1.** Vorrichtung zum Steuern eines Betriebs eines Hubkolbenmotorverdichters, umfassend:

einen Stromintegrator (60) zum Integrieren eines Wechselstroms, der während eines jeden Zyklus des Stroms an einen Motor des Hubkolbenmotorverdichters angelegt wird; **dadurch gekennzeichnet, dass** die Vorrichtung umfasst:

eine Steuereinheit (50) zum unabhängigen Steuern eines Zündwinkels ($\alpha_1$, $\alpha_2$) einer Schalteinrichtung, durch welche der Strom an den Motor angelegt wird, während einer positiven Phase und einer negativen Phase einer AC-Spannung, die an den Motor angelegt wird, basierend auf dem integrierten Wert des Stroms.

2. Vorrichtung nach Anspruch 1, wobei die Steuereinheit (50) den Zündwinkel ($\alpha_1$) während der positiven Phase und den Zündwinkel ($\alpha_2$) während der negativen Phase so steuern kann, dass sie verschieden sind, um eine positive Phase und eine negative Phase des Stroms, der an den Motor angelegt wird, symmetrisch sind.

3. Vorrichtung nach Anspruch 1, wobei die Steuereinheit (50) den Zündwinkel ($\alpha_1$) während der positiven Phase und den Zündwinkel ($\alpha_2$) während der negativen Phase so steuern kann, dass sie verschieden sind, um jegliche DC-Komponente im Strom, der an den Motor angelegt wird, zu verhindern.

4. Vorrichtung nach Anspruch 1, wobei, wenn der integrierte Stromwert größer als '0' ist, die Steuereinheit (50) den Zündwinkel ($\alpha_2$) während der negativen Phase der AC-Spannung verkleinert, während, wenn der integrierte Stromwert kleiner als '0' ist, die Steuereinheit den Zündwinkel ($\alpha_2$) während der negativen Phase der AC-Spannung vergrößert.

5. Vorrichtung nach Anspruch 1 bis 4, wobei die Vorrichtung ferner umfasst:

einen Stromdetektor (20) zum Erfassen des Stroms, der an einen Motor des Hubkolbenmotorverdichters angelegt wird;
einen Spannungsdetektor (10) zum Erfassen der AC-Spannung, die an den Motor angelegt wird;
einen Hubkalkulator (30) zum Berechnen eines Hubschätzwerts des Hubkolbenmotorverdichters basierend auf dem Wert des erfassten Stroms und einem Wert der erfassten Spannung;
einen Komparator (40) zum Vergleichen des Hubschätzwerts und eines voreingestellten Hubreferenzwerts und Ausgeben eines Differenzwerts gemäß dem Vergleichsergebnis; und
wobei die Steuereinheit (50) ferner eine Einschaltdauer der Schalteinrichtung, die mit dem Motor in Reihe geschaltet ist, gemäß dem Differenzwert steuert; und wobei die Steuereinheit (50) ein Steuersignal gemäß dem unabhängigen Steuern des Zündwinkels ($\alpha_1$, $\alpha_2$) erzeugt und das erzeugte Steuersignal an die Schalteinrichtung ausgibt.

6. Vorrichtung nach Anspruch 5, wobei die Schalteinrichtung ein Inverter ist.

7. Vorrichtung nach Anspruch 1 bis 5, wobei die Schalteinrichtung ein Triac ist.

8. Vorrichtung nach Anspruch 5, wobei die Schalteinrichtung ein Triac ist und der Triac durch das Steuersignal eingeschaltet wird.

9. Vorrichtung nach Anspruch 8, wobei der Zündwinkel ($\alpha_1$) während der positiven Phase unveränderlich ist, wenn der Zündwinkel ($\alpha_2$) während der negativen Phase der Spannung vergrößert oder verkleinert wird.

10. Verfahren zum Steuern eines Betriebs eines Hubkolbenmotorverdichters, umfassend:

Integrieren eines Wechselstroms, der während eines jeden Zyklus davon an den Motor eines Verdichters angelegt wird; **gekennzeichnet durch**
unterschiedliches Steuern einer Einschaltzeit einer Schalteinrichtung, welche das Anlegen des Stroms an den Motor schaltet, während einer positiven Phase und während einer negativen Phase einer AC-Spannung, die an den Motor angelegt wird, basierend auf dem integrierten Stromwert.

11. Verfahren nach Anspruch 10, wobei der Schritt des unterschiedlichen Steuerns der Einschaltzeit während der positiven Phase und während der negativen Phase umfasst:

Verkleinern eines Zündwinkels ($\alpha_2$) der Schalteinrichtung während der negativen Phase der Spannung, wenn der integrierte Stromwert größer als '0' ist; und

Vergrößern des Zündwinkels ($\alpha_2$) der Schalteinrichtung während einer negativen Phase der Spannung, wenn der integrierte Stromwert kleiner als '0' ist.

**12.** Verfahren nach Anspruch 10, wobei der Zündwinkel ($\alpha_1$) während der positiven Phase unveränderlich ist, wenn der Zündwinkel ($\alpha_2$) während der negativen Phase der Spannung vergrößert oder verkleinert wird.

## Revendications

**1.** Appareil pour commander un fonctionnement d'un compresseur alternatif comprenant :

un intégrateur de courant (60) pour intégrer un courant alternatif appliqué à un moteur du compresseur alternatif lors de chacun des cycles dudit courant ; **caractérisé en ce que** ledit appareil comprend
un contrôleur (50) pour commander de manière indépendante un angle d'amorçage ($\alpha_1$, $\alpha_2$) d'un dispositif de commutation à travers lequel ledit courant est appliqué audit moteur lors d'une phase positive et lors d'une phase négative d'une tension en courant alternatif appliquée au moteur, basé sur la valeur intégrée du courant.

**2.** Appareil selon la revendication 1, dans lequel le contrôleur (50) peut commander l'angle d'amorçage ($\alpha_1$) lors de la phase positive et l'angle d'amorçage ($\alpha_2$) lors de la phase négative pour être différent, afin de rendre symétrique une phase positive et une phase négative du courant appliqué au moteur.

**3.** Appareil selon la revendication 1, dans lequel le contrôleur (50) peut commander l'angle d'amorçage ($\alpha_1$) lors de la phase positive et l'angle d'amorçage ($\alpha_2$) lors de la phase négative pour être différent, afin d'empêcher une quelconque composante en courant continu dans le courant appliqué au moteur.

**4.** Appareil selon la revendication 1, dans lequel si la valeur intégrée du courant est supérieure à '0', le contrôleur (50) réduit l'angle d'amorçage ($\alpha_2$) lors de la phase négative de la tension en courant alternatif, tandis que si la valeur intégrée du courant est inférieure à '0', le contrôleur augmente l'angle d'amorçage ($\alpha_2$) lors de la phase négative de la tension en courant alternatif.

**5.** Appareil selon l'une quelconque des revendications 1 à 4, dans lequel ledit appareil comprend en outre :

un détecteur de courant (20) pour détecter le courant appliqué au moteur du compresseur alternatif ;
un détecteur de tension (10) pour détecter la tension en courant alternatif appliquée au moteur ;
un calculateur de course (30) pour calculer une valeur d'estimation de la course du compresseur alternatif sur la base de la valeur du courant détecté et sur une valeur de la tension détectée ;
un comparateur (40) pour comparer la valeur d'estimation de la course et une valeur de référence de course pré-établie, et pour délivrer une valeur de différence selon le résultat comparé ; et
dans lequel le contrôleur (50) commande en outre une période de mise sous tension du dispositif de commutation relié en série au moteur selon la valeur de différence, et dans lequel ledit contrôleur (50) génère un signal de commande selon ladite commande indépendante de l'angle d'amorçage ($\alpha_1$, $\alpha_2$) et délivre le signal de commande généré vers le dispositif de commutation.

**6.** Appareil selon la revendication 5, dans lequel le dispositif de commutation est un inverseur.

**7.** Appareil selon l'une quelconque des revendications 1 à 5, dans lequel le dispositif de commutation est un triac.

**8.** Appareil selon la revendication 5, dans lequel le dispositif de commutation est un triac, et dans lequel le triac est actionné par le signal de commande.

**9.** Appareil selon la revendication 8, dans lequel l'angle d'amorçage ($\alpha_1$) lors de la phase positive est fixé, quand l'angle d'amorçage ($\alpha_2$) lors de la phase négative de la tension est augmenté ou diminué.

**10.** Procédé pour commander un fonctionnement d'un compresseur alternatif comprenant :

l'intégration d'un courant alternatif appliqué au moteur d'un compresseur lors de chacun de ses cycles ; **caractérisé par**
la commande différente d'un temps de mise sous tension d'un dispositif de commutation commutant l'application du courant au moteur lors d'une phase positive et lors d'une phase négative d'une tension en courant alternatif appliquée au moteur, basée sur la valeur intégrée du courant.

**11.** Procédé selon la revendication 10, dans lequel l'étape consistant à commander différemment le temps de mise sous tension lors de la phase positive et lors de la phase négative comprend :

la réduction d'un angle d'amorçage ($\alpha_2$) du dispositif de commutation lors de la phase négative de la tension si la valeur intégrée du courant est supérieure '0' ; et
l'augmentation de l'angle d'amorçage ($\alpha_2$) du dispositif de commutation lors de la phase négative de la tension si la valeur intégrée du courant est inférieure à '0'.

**12.** Procédé selon la revendication 10, dans lequel l'angle d'amorçage ($\alpha_1$) lors de la phase positive est fixé quand l'angle d'amorçage ($\alpha_2$) lors de la phase négative de la tension est augmenté ou diminué.

# FIG. 1

# FIG. 2

# FIG. 3A

# FIG. 3B

CURRENT OF AC COMPONENT                    CURRENT OF DC COMPONENT

# FIG. 4

STROKE
REFERENCE VALUE

| VOLTAGE DETECTOR | 10 |
| STROKE CALCULATOR | 30 |
| COMPARATOR | 40 |

POWER

R

Tr

M

| CURRENT DETECTOR | 20 |
| CURRENT INTEGRATOR | 60 |
| CONTROLLER | 50 |

# FIG. 5

START

S11 — DETECTING CURRENT APPLIED TO MOTOR

S12 — INTEGRATING DETECTED CURRENT

S13 — INTEGRATED CURRENT VALUE < 0 ?

NO

YES

S14 — INCREASING FIRING ANGLE OF TRIAC DURING NEGATIVE PHASE OF VOLTAGE APPLIED TO MOTOR

S15 — REDUCING FIRING ANGLE OF TRIAC DURING NEGATIVE PHASE OF VOLTAGE TO MOTOR

END

# FIG. 6

**EP 1 669 602 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6779982 B
- US 20020064463 A1
- US 20030180151 A1